# EUROPEAN PATENT APPLICATION

(11) **EP 4 201 856 A1**
(43) Date of publication of application: **28.06.2023**
(21) Application number: 22215195.3
(22) Date of filing: 20.12.2022
(51) Int. Cl.: B65G 57/08, B65G 59/06, B65G 1/00

(54) **DEVICE FOR STORING OR RELEASING PALLETS AND MACHINE FOR MANAGING PALLETS WITH OR WITHOUT LOADS WITH SUCH DEVICE**

(30) Priority: 21.12.2021 IT 202100031994
(71) Applicant: Toppy S.r.l., 40053 Valsamoggia (BO) (IT)
(72) Inventor: PIANI, Daniele, 40050 Monte San Pietro (BO) (IT)
(74) Representative: Negrini, Elena

(57) **Abstract**

A device for storing or releasing pallets (P, S) includes:
- a body (51) provided with at least two mutually facing and parallel side walls (53), each having first (55) and second (57) transverse edges, and provided with at least one end wall (59) perpendicular to the side walls (53) and having first (61) and second (63) side edges; each first transverse edge (55) is fixed to a respective side edge of the end wall (59); these walls enclose a volume of shape and size such as to house a stack of pallets (P, S) arranged perpendicularly to the side (53) and end (59) walls;
- at least one axial element (65) for each side wall (53); each axial element (65) is connected to the respective side wall (53) parallel to said transversal (55, 57) and side (61, 63) edges and rotatably around its own geometric axis;
- a plurality of insert elements (67) for each axial element (65) protruding radially from the respective axial element (65); the insert elements (67) of each axial element (65) are mutually parallel, spaced and positioned to correspond to recesses of the pallets (P, S) of the stack;
- at least one actuator element (69) connected to the at least one axial element (65) of the respective sidewall (53) or of both sidewalls (53) for axially rotating the at least one axial element (65) by one or of both side walls (53) between a hold condition (F) in which the insert elements (67) engage cavities of the pallets (P, S) of the stack, blocking them, and a release condition (R) in which the insert elements (67) do not interfere with the pallets (P, S) of the stack, freeing them.

## Description

The present invention relates to the sector concerning logistics and tools for the storage and transport of goods and in particular it relates to a device for storing or releasing pallets and to a machine for managing pallets with or without loads incorporating one or more examples of such a device for storing or releasing pallets.

There are known machines for managing pallets with or without loads, for example of the type for processing, selecting or replacing pallets, which generally have the drawback of having to be fed and/or unloaded with only one incoming pallet and only one outgoing pallet at a time or for each processing cycle.

There are known devices for storing or releasing pallets so as to accumulate them during the operations to which these pallets are subjected.

In general, this type of known device has the disadvantage of being able to operate only in a vertical position and of not being able to retain the pallets placed therein in the event of their inclination or rotation, thus limiting the functionality of the machines with which they are associated.

Prior art document DE4224597C1 discloses a conveying vehicle having a lifting means for pallets and a store for stacking or de-stacking the pallets. The store has a plurality of holding arms which can be pivoted from an open position into a locking position in which the holding arms support the lowermost pallet of the stack.

The store disclosed by document DE4224597C1 is not fit to keep in position each pallet of the stack in case of tilting over a certain angle and if the store is overturned, the pallets can lose the correct position or can fall. Furthermore, the upper portion of said store is occluded by parts of the frame thereof and by the means to actuate the holding harms between the open and locking position so the pallets can enter and exit the store only from the front or bottom side thereof.

An object of the present invention is to propose a device for storing or releasing pallets which is simple, robust, relatively inexpensive which can be used independently or in association with a machine for managing pallets with or without loads by cooperating therewith.

Another object of the present invention is to propose a device capable of picking up and storing and/or releasing one or more pallets superimposed at the same time.

A further object of the present invention is to propose a device which can be tilted or overturned by 180° without excessive movements or losses of the pallets contained therein, where such device is suitable for being integrated into a machine for managing pallets with or without load.

Another object of the present invention is to propose a machine for managing pallets with or without loads, for example for the selection and/or processing of pallets or for the replacement of pallets each supporting a respective load, capable of accumulating in and/or at the exit and/or in a collecting store a plurality of pallets in order to speed up the operations performed by it and/or to minimize the number of pallet transfers.

The characteristics of the invention are highlighted below with particular reference to the accompanying drawings in which:
- figure 1 illustrates a front view of a device for storing or releasing pallets, object of the present invention, assigned to operate autonomously or associated with a machine for managing pallets with or without loads, where such device is in an operating condition in which contains and supports a stack of pallets;
- figures 2 and 3 are side-front axonometric views of the device of figure 1, in respective conditions for supporting and releasing pallets not shown;
- figure 4 illustrates an axonometric and lateral rear view of the device of figure 1 in a condition for supporting not shown pallets;
- figures 5 and 6 are side-front axonometric views, respectively in loaded and unloaded and overturned conditions, of the machine for managing pallets with or without loads, object of the present invention, and provided with two examples of the device for storing o releasing pallets of the previous figures;
- figures 7 and 8 show, from respective observation points, side-rear views of the machine of figure 5;
- figures 9-16 show front views of the machine of figure 5, associated with pallets and a load for the pallets, in a schematic and simplified sequence of replacement of the pallet originally supporting the load, at the beginning of the sequence, with a replacement pallet which, at the end of the sequence, supports the load.

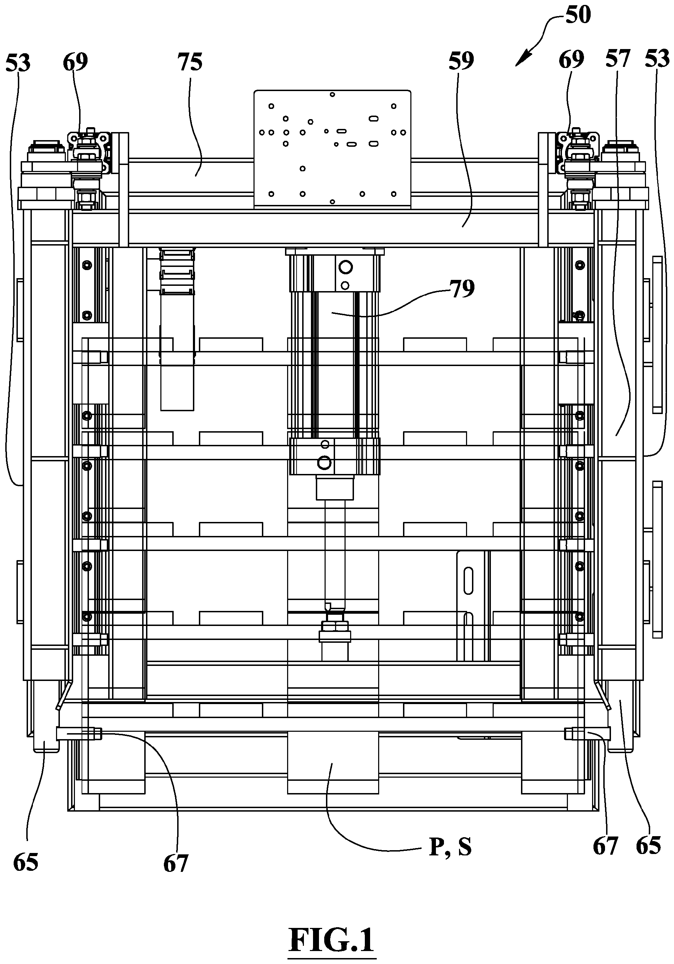

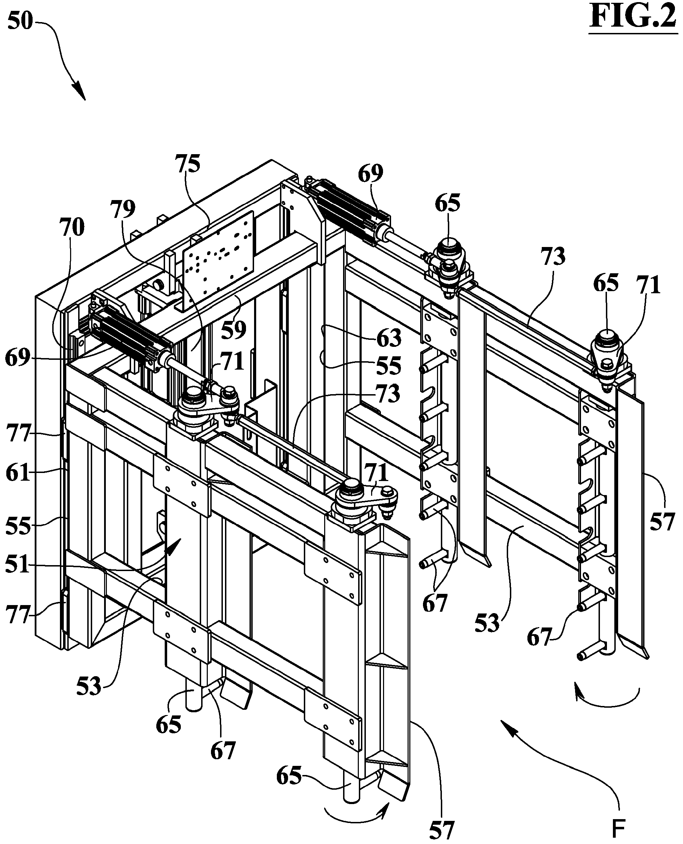

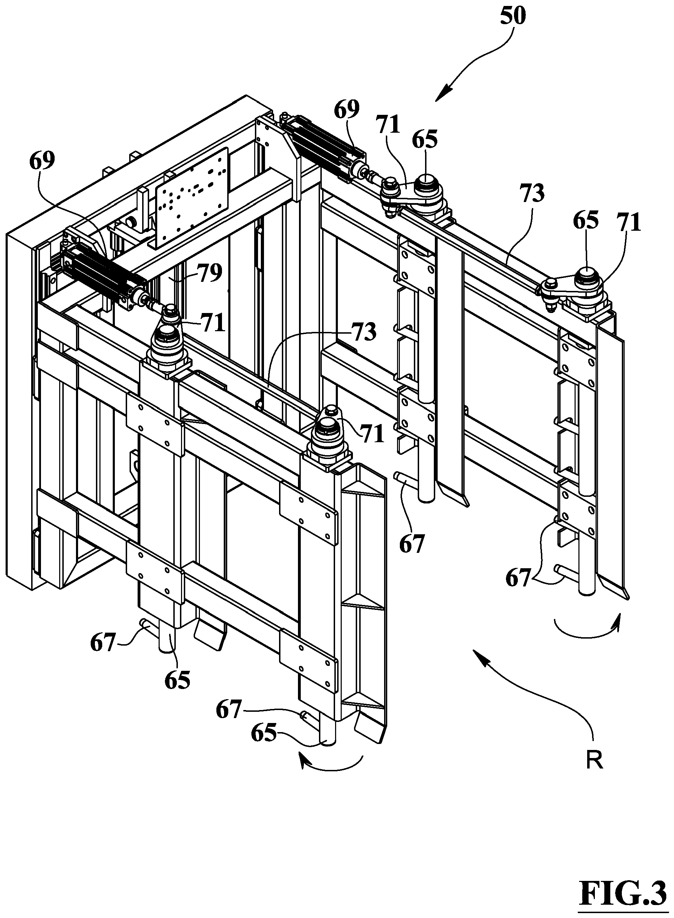

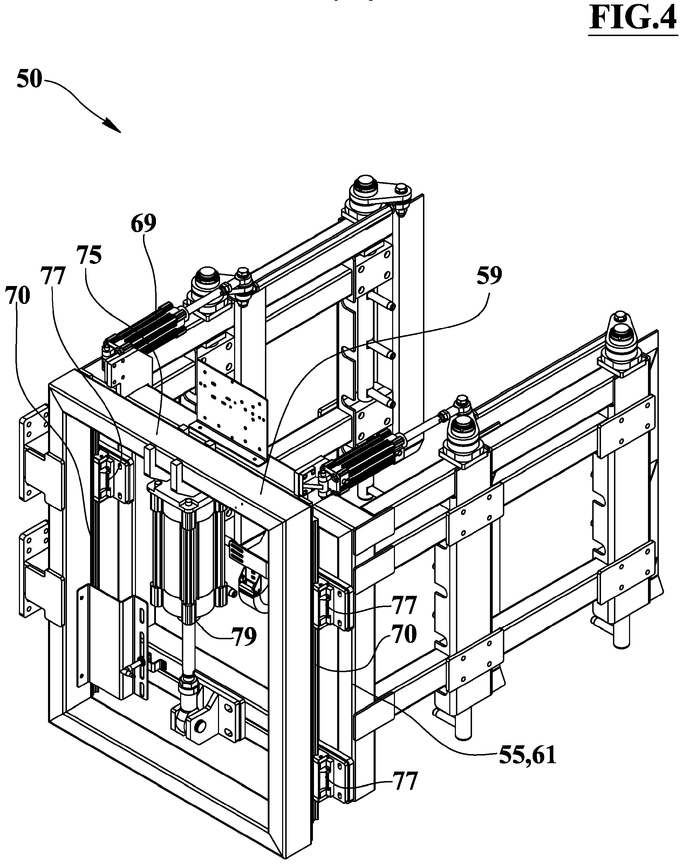

With reference to figures 1-4, numeral 50 indicates the device for storing or releasing pallets, object of the present invention, which can be associated, in one or more samples, with a machine for managing pallets with or without loads.

The device 50 comprises at least:
- a body or frame 51 provided with at least two solid or reticular side walls 53, rectangular or square, almost flat, facing each other and parallel, each having first 55 and second 57 transverse edges or corners; the body 51 is also provided with at least one solid or reticular end wall 59, rectangular or square, almost flat, perpendicular to the side walls 53 and having first 61 and second 63 side edges or corners; each first transverse edge 55 of the two side walls is fixed to a respective first 61 or second 63 side edge of the end wall 59, so that the three walls enclose a volume of shape and size suitable for housing a stack of pallets P, S arranged perpendicularly to the side walls 53 and to the end wall 59;
- at least one axial element 65 for each side wall 53, where each axial element 65 is connected to the respective side wall 53 parallel to said transverse edges 55, 57 and side edges 61, 63 and rotatably around its own geometric axis;
- a plurality of insert or arm elements 67 for each axial element, wherein each insert element 67 protrudes radially or perpendicularly from the respective axial element 65; the insert elements 67 of each axial element 65 are mutually parallel, spaced and positioned to correspond to cavities of the pallets P, S of the stack, preferably for four cavities or recesses of each of them P, S;
- at least one actuator element 69 connected to the at least one axial element 65 of the respective side wall 53 or of both side walls 53 for axially rotating the at least one axial element 65 of one or both side walls 53 between a hold condition F in which the insert elements 67 engage cavities of the pallets P, S of the stack, locking them, and a release condition R in which the insert elements 67 do not interfere with the pallets P, S of the stack, releasing them.

The side walls 53 and end walls 59 are, for example, made by means of a grid of horizontal and vertical beams mutually fixed, or alternatively they are made with plates, possibly with a corrugated profile to give greater stiffness to the body 51.

The axial element 65 is for example a beam or bar or tube pivoted to rotate on its own longitudinal axis.

Each side wall 53 preferably comprises two parallel axial element 65, spaced apart and actuated by a respective actuator element 69 so that in the hold condition F each pallet P, S is stably blocked by four insert elements 67 placed at the corners of a rectangle or geometric square.

A head of a respective rod element 71 is fixed to the ends of each of the axial element 65 protruding from the same edge of the body 51; the feet of the two rod elements 71 of each right or left side wall 53 are interconnected by a corresponding interconnecting rod element 73, such as for example a metal bar or rod, in turn directly or indirectly connected to a movable end of a respective right or left actuator element 69 whose opposite end is connected to the body 51. The rotation imposed on the rod elements 71 by the respective actuator element 69 determines the rotation of the respective axial element 65 and the consequent conditions of hold F and release R. Alternatively, a single actuator element 69 may be sufficient to rotate all the rod elements 71 and the axial element 65 of the device 50, the respective beam elements 73 being connected to each other and to the actuator element 69.

The device 50 also comprises a rigid support element 75, for example a frame or a reticulated beam structure, parallel to the end wall 59 and adjacent to the face of the latter 59 opposite the side walls 53; said end wall 59 is slidably connected to the support element 75 by means of a set of guides 77 and rails 70 parallel to said transverse edges 55, 57 and side edges 61, 63. The rails 70 are for example fixed to the edges of the support element 75.

A slide actuator 79 included in the device 50 interacts between the support element 75 and the end wall 59 for the linear translation of the body 51 with respect to the support element 75 itself.

Could be noted that each pallet into the device 50 can be locked by four insert elements 67 preventing moving, shifting and falling of the pallets also in case of shocks and, mainly, of overturning of said device.

The device 50 can be used in a machine for managing pallets with or without loads, as illustrated below, or for example along a pallet transport line to remove pallets from the line or to deposit further ones on the line, or in other configurations where it is necessary to store or release pallets.

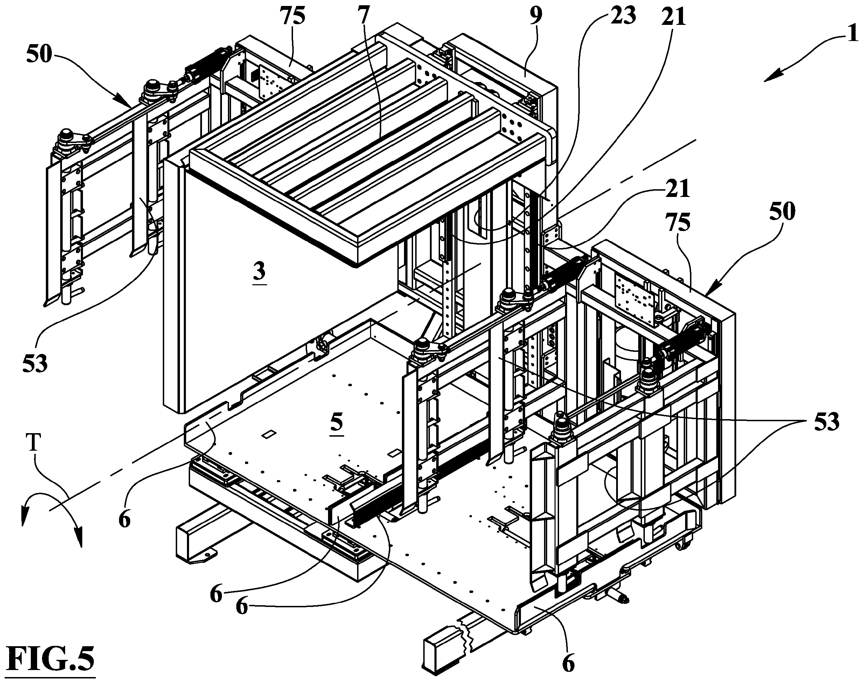

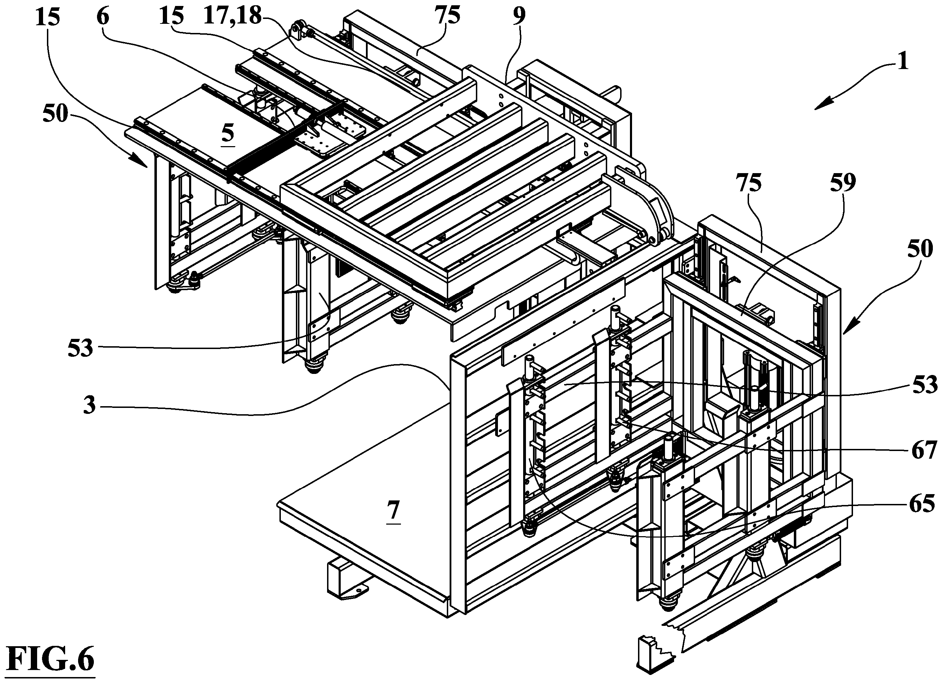

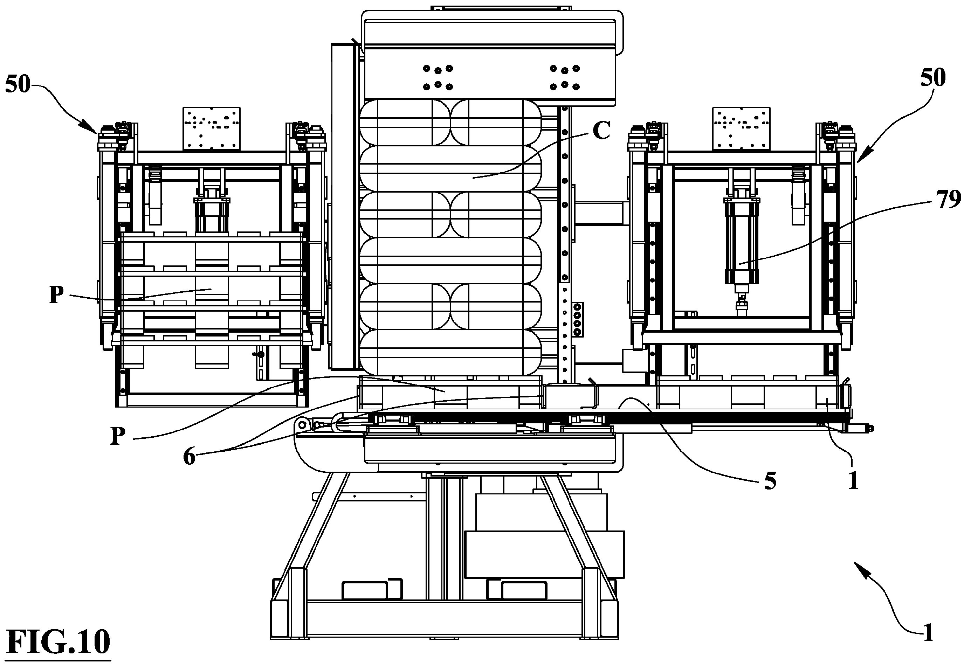

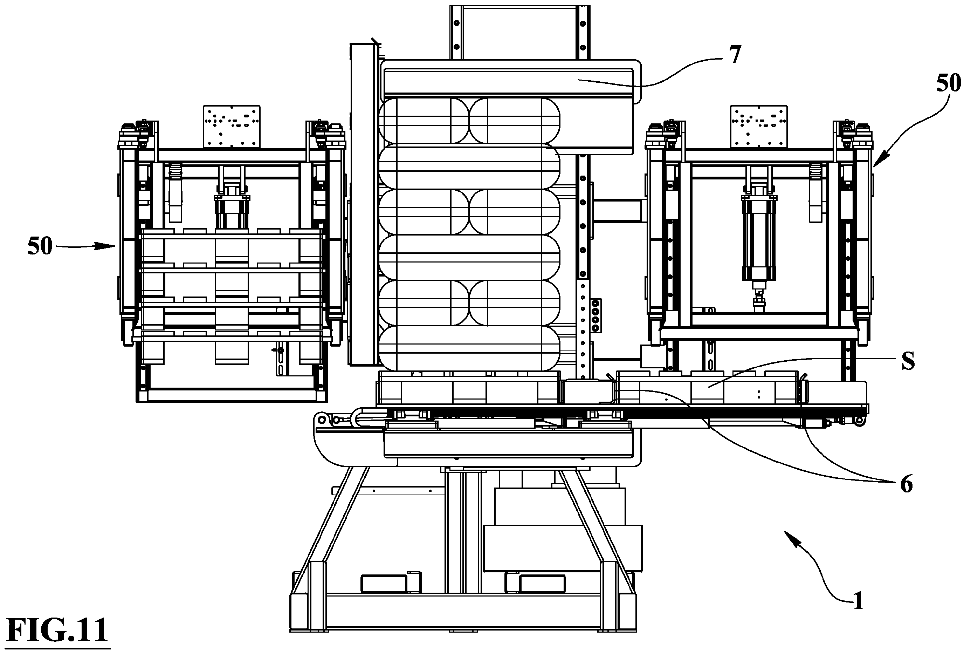

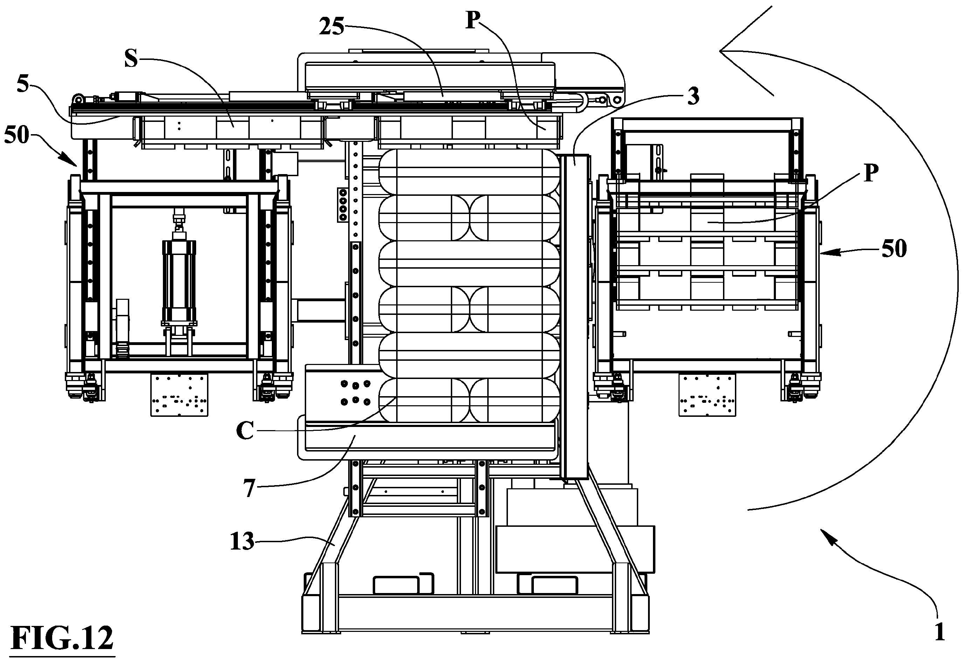

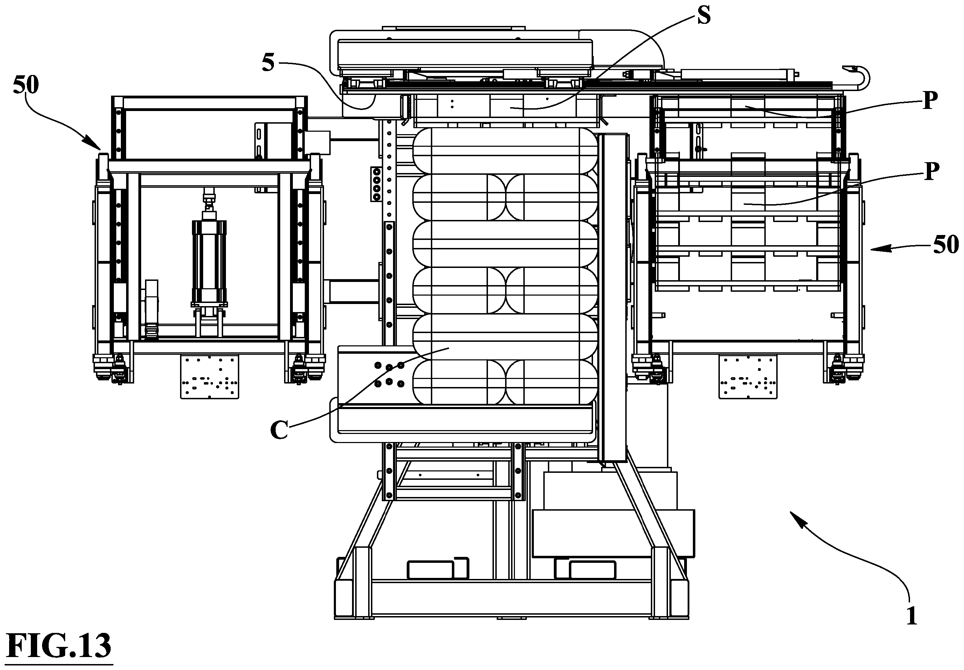

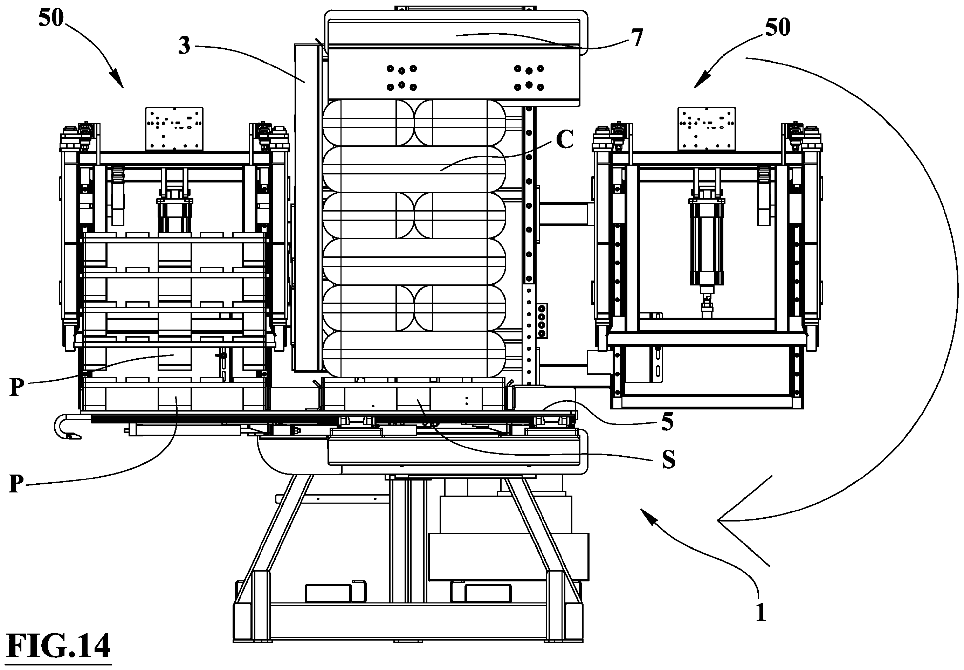

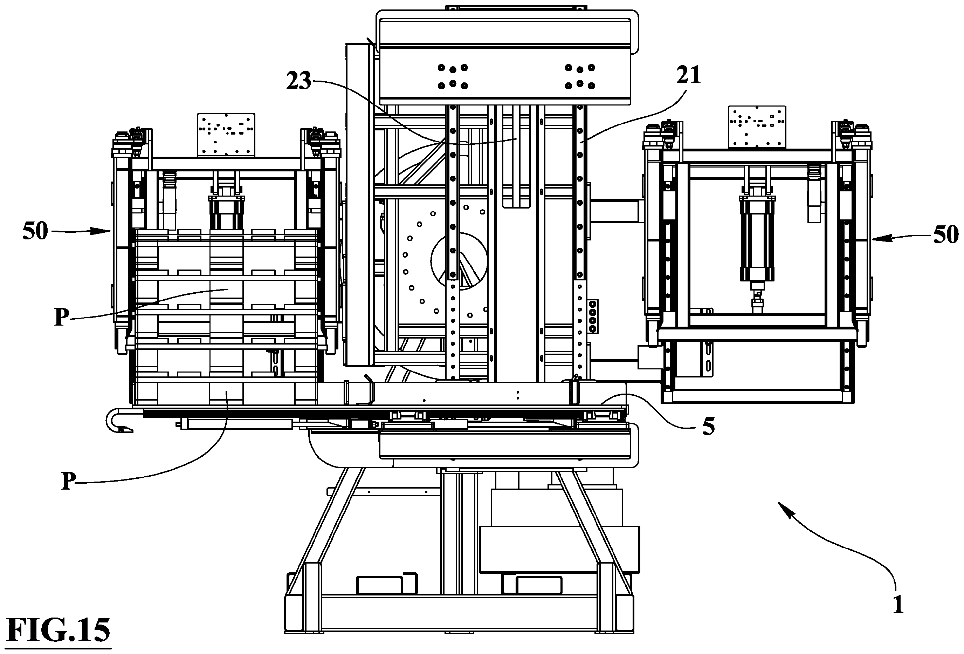

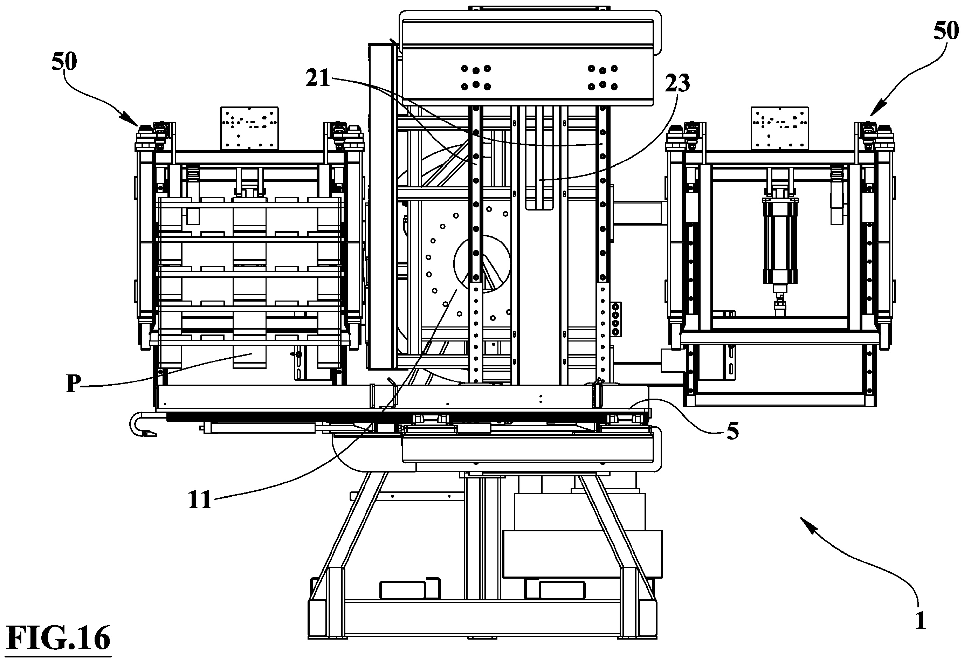

With reference to figures 5-16, numeral 1 indicates the machine, object of the present invention, for managing pallets with or without loads, having two devices 50 and assigned to replace a first pallet P, supporting the bottom face of a load C, with a second pallet S replacing the first P. The invention provides alternatively for the machine 1 to be provided with a single device 50 for supplying second pallets S or for picking up first pallets P or for other purposes. It should be noted that this variant could differ from the main embodiment only due to the absence of one of the two devices 50.

The machine 1, in addition to the two devices 50, comprises:
- a sliding surface element 3 having a flat face, for example with a rectangular-shaped plan and with a thickness between one hundredth and one fifth of the dimension of the smaller side of the rectangle, assigned for static and sliding abutment with a lateral face of the load C, where the surface of this flat face has low friction and possibly bears treatments or coatings to reduce static and/or dynamic friction with load C;
- a translating support element 5, for example with a plan in the shape of an oblong rectangle and with a thickness between one hundredth and one third of the dimension of the smaller side of the rectangle, having an elongated flat face assigned to abut with the pallets P, S side by side, of which the first P carrying the load C, where the translating support element 5 is provided with gripping elements 6 of the pallets to clamp and removably hold them against respective positioning areas or zones of the respective elongated flat face of the translating support element 5; this flat face of the translating support element 5 is perpendicular to the flat face of the sliding surface element 3;
- a control element of the load sliding 7, for example rectangular in shape and equal to or larger than the plan shape of the pallet P having the largest dimensions, having a face parallel and facing the positioning area or zone of the translating support element 5 and assigned to abut with one face of the load C opposite the respective bottom;
- a holding element 9, for example consisting of a set of interconnected beams or a reticular or box-like structure having an approximately L-shaped lateral profile, which rigidly constrains the sliding surface element 3 and which constrains the translating support element 5 to translate linearly on its geometric plane in the direction of its own longitudinal axis or to translate in a direction parallel to said face of the sliding surface element 3; the control element of the load sliding 7 is connected to the sliding surface element 3 and/or the holding element 9;
- a rotation member 11, of the pin or fifth wheel type, connected to the holding element 9 to allow rotation of the latter around a rotation axis T parallel to at least the flat face of the translating support element 5, between an initial condition, in which the sliding surface element 3 and the translating support element 5 are respectively vertical and horizontal, and their 3, 5 condition of replacement of the pallet in which they 3, 5 are rotated by over 90°, and vice versa.

Each device 50 for storing first pallets P or releasing second replacement pallets S comprises at least:
- a body 51 provided with at least two mutually facing and parallel side walls 53, each having first 55 and second 57 transverse edges, and provided with at least one end wall 59 perpendicular to the side walls 53 and having first 61 and second 63 side edges; each first transverse edge 55 is fixed to a respective first 61 or second 63 side edge, so that the three walls enclose a volume of shape and size suitable for housing a stack of pallets P, S arranged perpendicularly to the walls themselves;
- at least one axial element 65 for each side wall 53 connected to the respective side wall 53 parallel to the transverse edges 55, 57 and side edges 61, 63 and rotatably around its own geometric axis;
- a plurality of insert elements 67, for each axial element 65, where each insert element 67 protrudes radially from the respective axial element 65; the insert elements 67 of each axial element 65 are mutually spaced and positioned to correspond to recesses of the pallets P, S of the stack;
- at least one actuator element 69 connected to at least one axial element 65 of each side wall 53 to axially rotate the respective axial element 65 between a hold condition F in which the insert elements 67 engage cavities of the pallets P, S of the stack, locking them, and a release condition R in which the insert elements 67 do not interfere with the pallets P, S of the stack, releasing them;
- a support element 75 slidably connected to said end wall 59.

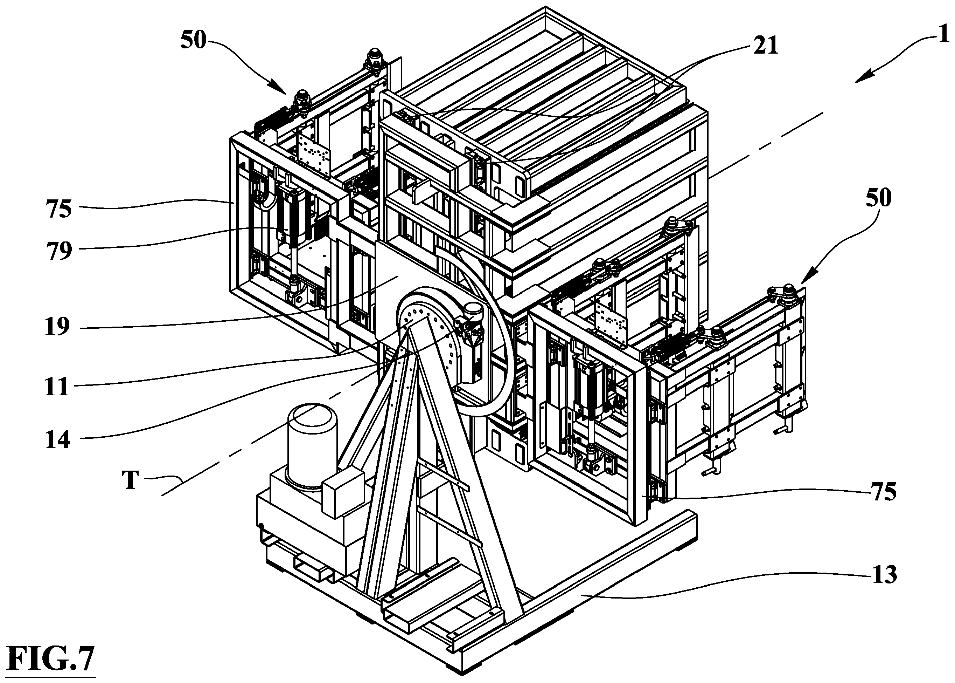

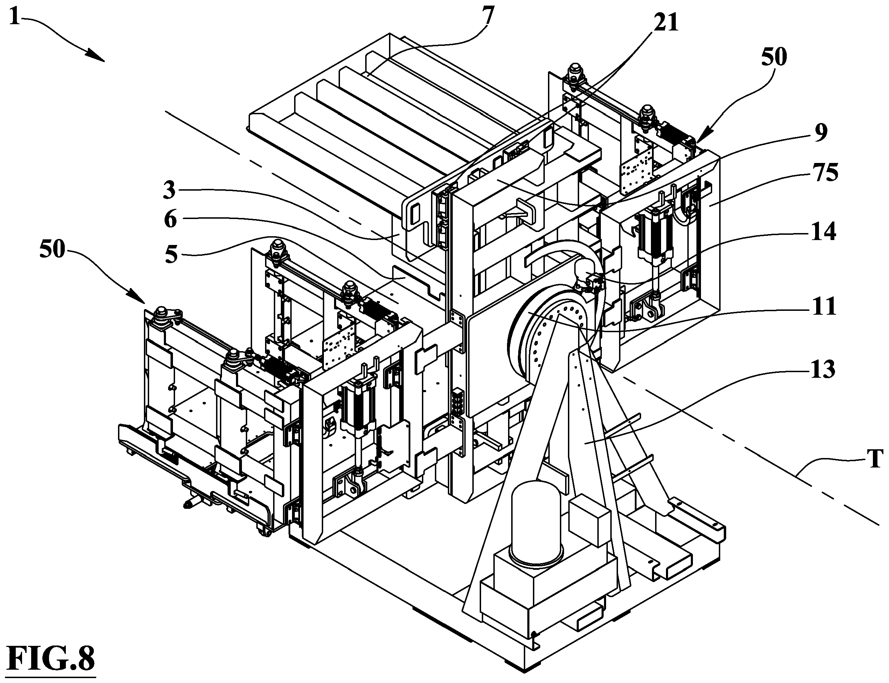

The support element 75 of each device 50 is solidly fixed to the holding element 9 so as to position the device 50 above the translating support element 5 in its extreme position and outside the projection of the control element of the load sliding 7 on the translating support element 5; in other words, the two devices are respectively fixed to the right and to the left of the holding element 9. As shown in figures 7 and 8, the two support elements 75 can be fixed to the holding element 9 by means of brackets, arms or bolted and/or welded plates, on one side, to the corresponding support element 75 and, on the other side, welded and/or bolted to a right or left side upright and/or to a right or left end of a crossbar of the holding element 9.

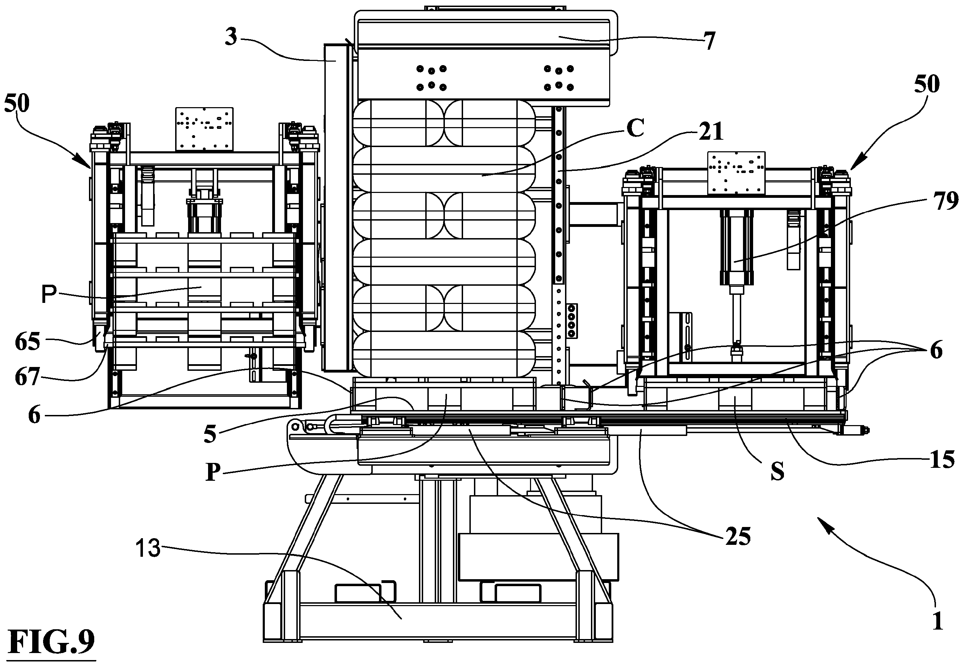

The device 50 on the right of figures 5 and 9 is assigned to release on the translating support element 5 a second pallet S at a time while the device 50 on the left in the same figures 5 and 9 is assigned to pick up and stack each first pallet P separate from load C.

The pallet to be replaced, i.e. the first pallet P, supports the bottom face, i.e. the face which is normally lower than the others, of load C; a second pallet S is replaced by the first P by machine 1.

The second pallet S can be identical to the first P and the replacement can be made necessary for reasons of hygiene, contamination or because the first pallet P is damaged, or the second pallet S can be of different material or dimensions or other characteristics and must replace the first pallet P for the most varied reasons, for example standardization, for logistical, economic reasons, etc.

Load C can consist of a plurality of packages, for goods, stacked to form a parallelepiped and possibly tied with tape or film, or it can consist of a single large package or any object otherwise packaged in the shape of a parallelepiped or other stackable shape.

A side wall 53 of the device 50, which with reference to figures 5 and 9 is the one on the left, is parallel, flanked and adjacent to the sliding surface element 3 on the side of the latter 3 opposite its face assigned to abut with the load C; a side wall 53 of the other device 50, the one on the right in these figures, is parallel, facing and spaced from the face of the sliding surface element 3 assigned to abut with the load. Again with reference to the spatial orientation of figures 5 and 7 of the machine 1, the distance between the left side wall 53 of the right device 50 and the sliding surface element 3 is greater than the maximum width expected for the pallets P, S; the distance between the right side wall 53 of the left device 50 and the sliding surface element 3 is a fraction of the width of the pallets; obviously the precise extent of these distances also depends on the construction details of the machine 1.

The two right and left devices 50 of the machine 1 are fixed to respective opposite sides of the holding element 9 to respectively carry out the supply of second replacement pallets S and the picking up of the first replaced pallets P. As already anticipated above, the invention provides for an alternative form of the machine 1 provided with a single device 50 assigned to feed the machine, for example with one pallet at a time, or to collect the pallets by stacking them; for example the alternative machine can be of the type for selecting pallets and provided with a pallet conveyor associated with a device of the invention positioned downstream of a detector, for example of the video camera type for recognizing a certain type of pallet or damaged pallets which are then picked up and stacked by the device.

Returning to the preferred embodiment of the machine 1, starting from an initial condition in which the sliding surface element 3 and the translating support element 5 are respectively vertical and horizontal and in which the translating support element 5 supports both the first pallet P with the respective load C facing and adjacent to, or against, the sliding surface element 3, and the second pallet S, released by the respective device 50 on the right, laterally to the first P, blocking them reversibly by means of the gripping elements 6, the rotation of the holding element 9 allowed by the rotation member 11 leads to the at least partial overturning of the load and of the first pallets P to be replaced and second S to replace a overturning angle greater than 90° and equal to or less than 180°, preferably to full 180° overturning, and leads to the sliding of the load C, limited by the control element of the load sliding 7, along the sliding surface element 3 until detachment and/or separation of the first pallet P from the bottom of the load C. This separation between the first pallet P and the bottom of the load C allows the translation of the translating support element 5 which laterally moves the first pallet P and simultaneously translates the second pallet S until it takes it to the area or zone previously occupied by the first pallet P above the overturned bottom of load C.

Subsequently, the holding element 9 rotates in the opposite direction to the rotation initially performed, causing the load C to slide along the sliding surface element 3 until it meets and rests on the second pallet S, completing the replacement. The first pallet P, following the translation of the translating support element 5 and the rotation of the holding element 9, finds itself under the left device 50 which picks up such first pallet P after its release from the gripping elements 6.

The control element of the load sliding 7 preferably consists of a flat body or defines an abutment plane with the top of the load C and is connected to a portion of the holding element 9, and therefore to the sliding surface element 3 perpendicularly to this 3 and parallel to the translating support element 5 with respect to which it moves towards and away from it 5 by effect of actuation members comprising a set of linear guides 21, with respective carriages, and at least one first linear actuator 23 mutually parallel and perpendicular to the translating support element 5, to the control element of the load sliding 7 and to the rotation axis T.

The control element of the load sliding 7 allows the load C and the first pallet P or the second pallet S to be clamped against the translating support element 5 at least during part or all of the overturning rotation and the opposite rotation, avoiding displacements and perturbations of the load C; moreover the control element of the load sliding 7 guides and stops the sliding of the load C along the sliding surface element 3 when the latter 3 is rotated by said overturning angle and, after the translation of the translating support element 5 and the consequent replacement of the pallet, moves the load C in the retrograde direction, bringing its bottom up against the second pallet S.

The control element of the load sliding 7 can be locked to the sliding surface element 3 at an adjustable distance from the translating support element 5 so that this distance corresponds to the total height of the first pallet P with the load C added with the desired mutual distancing that is to be obtained for mutual separation and that all drives, translations and rotations, or part of them, can be performed manually and/or in a motorized manner.

The translating support element 5 is preferably connected to the holding element 9 by means of a set of slide guides 15, with respective carriages, and at least one linear actuator 17 or linear damper 18, for example of the motorized rack and pinion type or of cylinder and piston type with internal viscous fluid, also called hydraulic damper; the slide guides 15 and the actuator 17 or damper 18 are parallel to each other, to the longitudinal development of the translating support element 5 and to the direction of translation of the translating support element 5 which they 15, 17 define.

The gripping elements 6 of the pallets comprise two pairs of winglets protruding transversally from the flat face of the translating support element 5. One pair of winglets is assigned to clamp and release the first pallets P and the other pair of second pallets.

Each pair of winglets preferably comprises a winglet of the fixed type and a winglet that moves towards and away from the respective fixed winglet or each pair consists of two mobile winglets. The movable winglets translate longitudinally by effect of second linear actuators 25, respective or common to all the gripping elements 6 of the machine 1, for example comprising guides and electric, hydraulic or pneumatic actuators. Each winglet can consist of a straight and elongated element and made in a single body or of several aligned and interconnected elements. In summary and preferably one winglet of a pair of winglets is fixed and locked transversely to the translating support element 5, and the other is movable and translating towards the corresponding fixed winglet to clamp the respective first P or second S pallet or translating in opposite direction to release that pallet.

So that these winglets protruding from the translating support element 5 do not interfere with the sliding surface element 3, this is preferably spaced from the translating support element 5 and from the corresponding gripping element 6 for the passage of the latter 6 and of the first pallet P between these sliding surface elements 3 and the translating support element 5.

The machine 1 also comprises a base structure member 13, for example made with interconnected beams or a box-like or reticular body, assigned to be fixed on a horizontal floor and connected to the holding element 9 by means of the rotation member 11 in so that the respective rotation axis T is horizontal and at a height with respect to the floor such as to allow that at least in the initial condition the sliding surface element 3 and the translating support element 5 are respectively vertical and horizontal and to allow the free rotation of the holding element 9, and of what is fixed or connected to it, at least up to the condition of replacement of the pallet, and vice versa.

The rotation axis T is parallel to the sliding surface element 3 and to the translating support element 5.

Alternatively, the rotation member 11 may be supported by parts of the installation environment of the machine 1 or by means not included in the machine 1.

Rotation actuators 14 of the linear or rotary type are preferably included in the machine 1, interposed between the structure member 13 and the holding element 9 for the rotation of the latter 9. In particular, the embodiment illustrated in figure 7 provides for the adoption of a single rotation actuator 14 of the rotary, electric or pneumatic type, for example provided with a ring gear with axis parallel to the rotation axis T. Alternatively, the rotation actuator can be linear and/or hydraulic.

The machine 1 can include manual actuation commands for the devices 50 and possibly the remaining elements of the machine 1. Alternatively, the machine 1 can include control means of the programmable digital type and provided with input ports for signals supplied by status, presence, rotation and position sensors of the elements of the machine 1 and of output doors for actuation commands of the active parts of the machine 1, and in particular of the device or devices 50, for the programmed operation of the machine 1 in automatic or semi-automatic mode. These commands are given by the control means according to its own programming and the signals received from the sensors.

The load C supported by the second pallet S can be picked up, preferably after a slight lifting of the control element of the load sliding 7, by a transpallet, a lifter or other suitable means. Once this is done, the translating support element 5 can be moved backwards.

## Claims

1. Device for storing or releasing pallets (P, S) **characterized in that** it comprises at least:
- a body (51) having at least two side walls (53) mutually facing and parallel, each having first (55) and second (57) transverse edges, and having at least an end wall (59) perpendicular to the side walls (53) and having first (61) and second (63) side edges, where each first transverse edge (55) of the two side walls (53) is fixed to a respective first (61) or second (63) side edge of the end wall (59), where the walls enclose a volume of shape and dimensions such to host a stack of pallets (P, S) arranged perpendicularly to the side (53) and end (59) walls;
- at least one axial element (65) for each side wall (53), where each axial element (65) is connected to the respective side wall (53) in parallel with said transverse (55, 57) and side (61, 63) edges and rotatably around its own geometrical axis;
- a plurality of insert elements (67) for each axial element (65), where each insert element (67) radially protrudes from the respective axial element (65); the insert elements (67) of each axial element (65) are mutually parallel, spaced and arranged to match cavities of the pallets (P, S) in the stack;
- at least an actuator element (69) connected to the at least one axial element (65) of the respective side wall (53) or of both the side walls (53) to axially rotate the at least one axial element (65) of one or both the side walls (53) between a hold condition (F) in which the insert element (67) occupy cavities of the pallets (P, S) in the stack, blocking them, and a release condition (R) in which the insert elements (67) do not interfere with the pallets (P, S) in the stack, releasing them.

2. Device according to claim 1 **characterized in that** each side wall (53) comprises two axial elements (65) parallel, spaced and operated by a respective actuator element (69) so that in the hold condition (F) each pallet (P, S) is blocked by four insert elements (67) placed at the vertices of a geometrical rectangle or square.

3. Device according to claim 2 **characterized in that** at the extremities of each axial element (65) protruding from the same edge of the body (51) a head of a respective rod element (71) is fixed, with the feet of the two rod elements (71) of each right or left side wall (53) interconnected by a corresponding beam element (73), in turn directly or indirectly connected to a mobile end of a respective right or left actuator element (69) whose opposite end is connected to the body (51).

4. Device according to any one of the preceding claims **characterized in that** it comprises a support element (75) parallel to the end wall (59) and adjacent to the face of the latter (59) opposite to the side walls (53), with said end wall (59) slidably connected to the support element (75) by means of a set of tracks (77) and rails (70) parallel to said transverse (55, 57) and side (61, 63) edges, and **in that** it comprises a slide actuator (79) interacting between the support element (75) and the end wall (59) for the translation of the body (51).

5. Machine for managing pallets with or without loads having at least one device (50) of any one of the preceding claims, and fit for substituting a first pallet (P), supporting the bottom face of a load (C), with a second pallet (S) replacing the first (P) one; said machine being **characterized in that** it comprises:
- a slide surface element (3) having a flat face assigned to static and sliding abutment with a lateral face of the load (C);
- a translating support element (5) having an elongated flat face assigned to abut with the side-by-side pallets (P, S) and provided with at least one pallet gripping element (6); such flat face of the translating support element (5) is perpendicular to the flat face of the slide surface element (3);
- a control element of the load sliding (7) having a face parallel to the translating support element (5) and assigned to meet with a face of the load (C) opposite to the respective bottom;
- a holding element (9) which rigidly constrains the slide surface element (3) and which constrains the translating support element (5) to translate linearly on its own geometric plane in the direction of its own longitudinal axis or to translate in the direction parallel to said face of the slide surface element (3); where the control element of the load sliding (7) is connected to the slide surface element (3) and/or to the holding element (9);
- a rotation member (11) connected to the holding element (9) to allow for the rotation of the latter around a rotation axis (T) parallel to at least the flat face of the translating support element (5), between an initial condition, in which the slide surface element (3) and the translating support element (5) are respectively vertical and horizontal, and a pallet replacement condition in which they (3, 5) are rotated by more than 90° and vice versa;
said at least one device (50) comprises at least a support element (75) slidably connected to said end wall (59) and solidly fixed to the holding element (9) so to keep the device (50) over the translating support element (5) in an extreme position thereof and external to the projection of the control element of the load sliding (7) on the translating support element (5); the at least one device (50) is assigned to release onto, or to pick up from, the translating support element (5) a second (S) or first (P) pallet.

6. Machine according to claim 5 **characterized in that** it comprises two devices (50) for storing first pallets (P) and for releasing replacement second pallets (S), respectively.

7. Machine according to claim 5 or 6 **characterized in that** it comprises a base structure member (13), assigned to be fixed to a horizontal floor and connected to the holding element (9) by means of the rotation member (11) in a way that the respective rotation axis (T) is horizontal and at a height with respect to the floor such as to allow that at least in the initial condition the slide surface element (3) and the translating support element (5) are respectively vertical and horizontal and to allow for free rotation of the holding element (9), and of what is fixed or connected thereto, at least up to the replacement condition of the pallet and vice versa.

8. Machine according to claim 7 **characterized in that** it comprises rotation actuators (14) of the linear or rotary type interposed between the structure member (13) and the holding element (9) for the rotation of the latter (9) and **in that** the translating support element (5) is connected to the holding element (9) by means of a set of slide guides (15) and at least one linear actuator (17) or damper (18), where such slide guides (15) and the actuator (17) or damper (18) are parallel to each other, to the longitudinal development of the translating support element (5) and to the translation direction of the translating support element (5) which they (15, 17) define.

9. Machine according to any one of claims 5-8 **characterized in that** the rotation axis (T) is parallel to the slide surface element (3) and to the translating support element (5).

10. Machine according to any one of claims 5-9 **characterized in that** the control element of the load sliding (7) has a flat body or defines a contact surface with the load (C) connected to the slide surface element (3) perpendicularly thereto and in parallel with the translating support element (5) with respect to which it (7) moves towards it (5) or away from it (5) by means of operating members comprising a set of linear guides (21) and at least one first linear actuator (23) mutually parallel and perpendicular to the translating support element (5) and to the control element of the load sliding (7).

11. Machine according to any one of claims 5-10 **characterized in that** the slide surface element (3) is spaced from the translating support element (5) and from the corresponding at least one gripping element (6) for letting the latter (6) and the first pallet (P) pass between the slide surface element (3) and the translating support element (5).

12. Machine according to any one of claims 5-11 **characterized in that** each pallet gripping element (6) comprises at least two sets of winglets transversally protruding from the flat face of the translating support element (5) of fixed type and of longitudinally translating type, by means of respective or common second linear actuators (25), towards and away from the fixed type winglets.

13. Machine according to any one of claims 5-12 **characterized in that** it comprises controllers for the manual operation of the at least one device (50) and possibly of the remaining elements of the machine (1) or **in that** it comprises control means of the programmable digital type provided with input ports for signals supplied by sensors of the state and position of the elements of the machine (1) and with output ports for operation commands of the active parts of the machine (1) and in particular of the at least one device (50) for the programmed operation of the machine (1).
